# EUROPEAN PATENT SPECIFICATION

(11) **EP 1 521 431 B1**
(45) Date of publication and mention of the grant of the patent: **11.07.2007**
(21) Application number: 03388065.9
(22) Date of filing: 03.10.2003
(51) Int. Cl.: H04M 1/23

(54) **Slidable button for mobile station**
Schiebetaste für Mobilstation
Bouton coulissant pour station mobile

(43) Date of publication of application: 06.04.2005
(73) Proprietor: Sony Ericsson Mobile Communications AB, 221 88 Lund (SE)
(72) Inventor: Ottocan, Robert, 211 37 Malmö (SE)
(74) Representative: Boesen, Johnny Peder

(56) References cited:
- WO-A-02/082250
- US-A- 4 044 242
- US-B1- 6 292 562

## Description

### Technical field of the invention:

This invention relates to a user interface of a mobile station, which user interface comprises at least one button for inputting data into the mobile station.

### Description of related art:

Most common mobile stations, such as mobile phones, personal digital assistants, pagers, etc., contain user interfaces with a plurality of buttons being able to be pushed to enter data into the phone, such as text and numbers. An alternative is a touch screen.

In some user interfaces, two or more different parts of one and the same button can be pushed, a distinction being made between pushing of each different part of the button.

The mobile telephone industry tries to produce smaller and smaller mobile telephones. Meanwhile, the display tends to take up a relatively larger part of the mobile telephone, supporting services such as games, picture representations, displaying of photos. For this reason the physical space for a user interface on a modern mobile telephone tends to decrease. Therefore use of the user interface of a modern mobile telephone can be somewhat cumbersome in that the size of the buttons has become small compared to the average size of adult fingers. Therefore the need for a different type of user interface to a mobile telephone exists.

US 6,292,562 B1 describes a mobile telephone with a displaceable button used instead of a keyboard or keypad.

The object of this invention is to provide an alternative to the prevalent user interfaces. A further object is to provide a space efficient and user friendly user interface.

### Summary of the invention:

These objects are achieved, when the user interface of a mobile unit according to the invention the user interface comprises a first button which is arranged to be slidable between different positions. Hereby, the space needed for a user interface can be reduced considerably.

According to a preferred embodiment the user interface further comprises a slot within which the first button is slidable. This provides an easy way of implementing the invention. The slot can be formed with stops in the form of areas with increased friction between the first button and the slot. Preferably, the stops are related to positions with information that can be input into the mobile station, such as numerals or signs. Hereby, the user friendliness of the user interface is enhanced in that the positions of the first button corresponding to a sign or numeral are easily detected during the motion of the first button.

Preferably, the positions between which the button is slidable comprise numeral positions related to at least one of the numerals 0 to 9, and preferably the positions between which the button is slidable moreover comprise sign positions related to signs, such as #, *, etc. Hereby, more than 10 buttons on a traditional user interface can be replaced by the first button arranged to be slidable between different positions. It should be noted that a numeral or sign position could be related to more than one numeral or sign, respectively, and that such a position might be related to both numerals and signs.

According to a further preferred embodiment, the user interface comprises means for entering information related to the position of the first button into the mobile station. Preferably, the entering means is a second button being able to be pressed down, which pressing down activates the entering of information related to the position of the first button into the mobile station. Hereby, a way of entering numerals and signs into the memory is achieved, in that a user can slide the first button between numeral and sign positions and enter the information corresponding to the position of the first button by pressing the second button.

In yet a further preferred embodiment the entering means is means for enabling the first button to be pressed down, when it is in a numeral or sign position, which pressing down activates entering of the information related to the position of the first button into the mobile station. Hereby, a way of entering numerals and signs by the use of one hand only is achieved, in that a user can slide the first button to a position and enter the information corresponding to that position by pressing down the first button.

Preferably, the mobile station is a mobile telephone or a Personal Digital Assistant and the user interface is used as a keypad or a keyboard.

It should be emphasised that the term "comprising/comprises" when used in this specification is taken to specify the presence of stated features, integers, steps or components but does not preclude the presence or addition of one or more other features, integers, steps, components or groups thereof.

The term "mobile station" is meant to include all equipment such as mobile telephones, cellular telephones, radio telephones, pagers, communicators, i.e. electronic organizers, smart phones or the like. However, the term "mobile station" should not be interpreted as limited to the above, but relates to any mobile electric or electronic consumer equipment wherein a user interface according to the invention might be appropriate, such as calculators, GPS receivers, etc.

Within this description, the term "user interface" is meant to cover the means with which a user can input information into a mobile station; thus the term "user interface" includes any input means which can be used as a keyboard, a keypad, a pushbutton key set, etc.

### Brief description of the drawings:

The invention will be described more fully below in connection with preferred embodiments and with reference to the drawings, in which:
Fig. 1 shows a user interface of a mobile station according to the invention;
Fig. 2 shows an alternative user interface according to the invention; and
Fig. 2a shows a detail of fig. 2.

### Detailed description of embodiments:

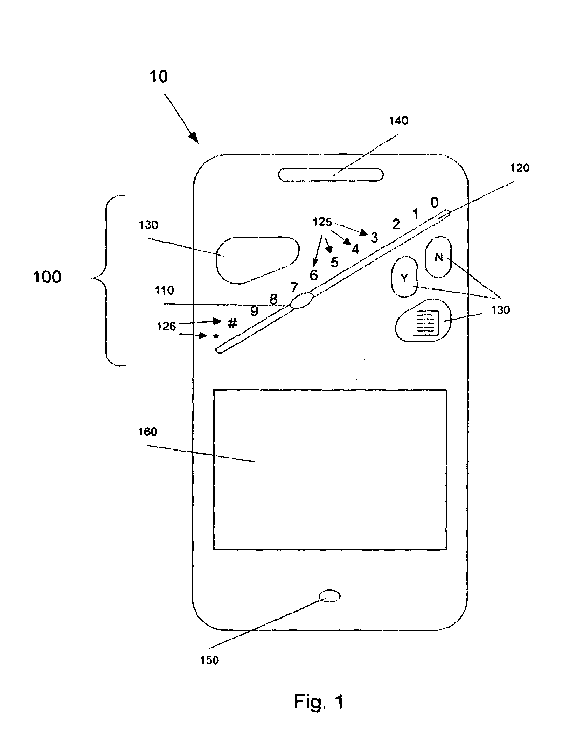

Fig. 1 shows a mobile station 10, for instance a mobile telephone, seen from ahead and incorporating a user interface 100 according to the invention. The mobile station 10 moreover comprises a memory (not shown), a display 160, a microphone 150, a loudspeaker 140, and communication means (not shown); however, these elements of the mobile station do not form part of the invention. The invention regards the user interface 100, which contains a first button 110 and a few other buttons 130. The first button 110 is arranged in a slot 120 and is able to be slid between different input positions of the slot. Each of these input positions is related to at least one numeral and/or sign 125, 126 to be input into the mobile station. However, in the embodiment shown, each position is related to one numeral 125 or one sign 126. These numeral and sign positions could alternatively be denoted as "input positions" in that they relate to positions of the first button corresponding to a numeral or sign to be input into the mobile station.

The slot 120 and/or the first button 110 can be provided with means for entering or inputting information related to the position of the first button 110 into the mobile station. Such entering means could be a second button 130 that can be pressed down, where the pressing down of the second button 130 activates the entering or inputting of information related to the position of the first button 110 into the mobile station. Alternatively, the entering or inputting means could be means for enabling the first button to be pressed down, when it is in a input position, i.e. a numeral or sign position, where the pressing down of the first button activates the entering of the information related to the position of the first button into the memory. Finally, the entering means could comprise an automatic entering of the information related to the position of the first button, whenever the first button has been in an input position, i.e. sign or numeral position, for a predetermined time interval, such as for instance 3 seconds. In this case, the slot should preferably have one or more pause positions, in which the first button could be positioned without activation of entering its position into the mobile station.

In fig. 1 the input positions are shown with a distance between them; this distance could be related to positions wherein no entering of signs or numerals is possible. Alternatively, the input positions, i.e. sign and/or numeral positions, could be contiguous, so that the first button 110 always is in an input position. Of course, this first button 110 might be able to be locked or paused in conditions wherein entering of numerals/signs are unwished or undesirable. Naturally, the first button 110 can be combined with any appropriate additional buttons with suitable functions, such as a button to turn the mobile station on/off, a button for connecting, a button for disconnecting, etc. The mobile station shown in fig. 1 comprises a four buttons 130 in addition to the first button 110. Such four buttons 130 could comprise one button for turning on the mobile telephone and for connecting calls; one button for turning off the mobile telephone and for disconnection calls; one button for phone book lookups and one button for predefined and/or user defined menus. These buttons might have additional functions and are merely described as an example only.

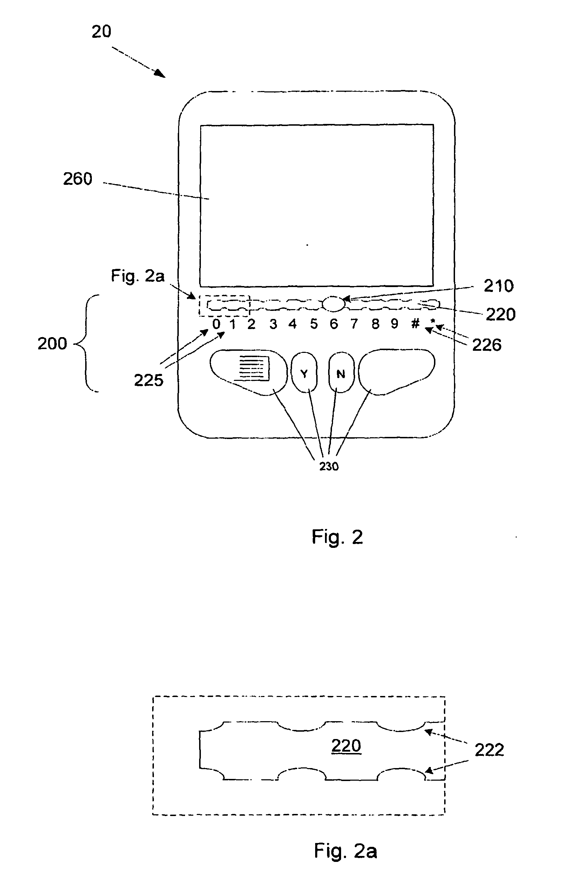

Fig. 2 shows an alternative mobile station 20, for instance a digital personal assistant, seen from ahead and incorporating an alternative user interface 200 according to the invention. As in fig. 1, the mobile station 20 preferably comprises a memory (not shown), a display 260, a microphone 250, and a loudspeaker 240; however, these elements of the mobile station do not form part of the invention. The invention regards the user interface 200, which contains a first button 210 and a few other buttons 230. The first button 210 is arranged in a slot 220 so that it is able to be slid between different input positions of the slot. Each of these input positions is related to at least one numeral and/or sign 225, 226 to be input into the mobile station. However, as in fig. 1, each position is related to one numeral 225 or one sign 226. These numeral and sign positions could alternatively be denoted as "input positions" in that they relate to positions of the first button corresponding to a numeral or sign to be input into the mobile station.

In fig. 2, the slot 220 is shown with stops 222; a detail of the slot 220 in fig. 2 is shown in an enlarged view in fig. 2a. In fig. 2a the left end of the slot 220 is shown, corresponding to the numeral positions related to "0" and "1" in fig. 2. The stops 222 in fig. 2a are formed as rounded tongues, placed on opposite parts of the slot 220 so that relatively narrow portions of the slot are formed. These narrow portions provides an increased friction between the slot and the first button 210, in comparison with the wider portions of the slot 220, when the first button 210 is slid from one position to another; In fig. 2 and 2a the wider portions of the slot 220 corresponds to places wherein a movement of the first button has been slowed down by tongues 210; these places preferably corresponds to an input position, so that the tongues 222 act to slow down and eventually stop the first button in an input position, so that a user without doubt can detect when the first button is in an input position. Moreover, the sign or numeral corresponding to the input position could be shown in the display 260. Fig. 2 and 2a provides an example only of how the first button 210 can be slowed down in a user caused movement. However, any alternative way of slowing down the movement could be use, e.g. alternative ways of providing different frictions between the first button and the slot, such as choice of different materials, magnetic or electronic means for providing different friction of the parts.

Other means for making the first button slidable than a slot are conceivable, such as a button with a through hole, where a bar or a rail extend through the hole, or a button arranged between two bars or rails. Additionally, electrical or magnetic means might be able to make a button slidable between different positions.

It should be noted that any combination of features shown in fig. 1, 2 and 2a could be used as appropriate. Moreover, it should be noted that the mobile stations shown in the figures naturally are equipped with necessary electric and electronic elements to input information into the mobile station, to connect the different elements of the mobile station.

Finally, it should be noted that the term "slot" is meant to describe any elongated slit or cavity and that it can have any appropriate shape, e.g. rounded, circular, triangular, as a half circle, etc.

## Claims

1. A user interface (100; 200) for a mobile station (10; 20), which user interface (100; 200) comprises at least one button (110, 130; 210, 230) for inputting data into the mobile station and a slot (120; 220) within which a first button (110; 210) is slidable between different positions, **characterized in that** the slot (120; 220) is formed with stops (222) in the form of areas with increased friction between the first button (110; 210) and the slot (220).

2. A user interface (100; 200) according to claim 1, wherein the positions between which the first button (110; 210) is slidable comprise numeral positions (125; 225) related to at least one of the numerals 0 to 9.

3. A user interface (100; 200) according to claim1 or 2, wherein the positions between which the button is slidable comprise sign positions (126; 226) related to signs.

4. A user interface (100; 200) according to claim 1, 2 or 3, **characterized in that** the user interface (100; 200) comprises means for entering information related to the position of the first button (110; 210) into the mobile station (10; 20).

5. A user interface (100; 200) according to claim 4, **characterized in that** the entering means is a second button (130; 230) being able to be pressed down, which pressing down activates the entering of information related to the position of the first button (110; 210) into the mobile station.

6. A user interface (100; 200) according to claim 4, **characterized in that** the entering means is means for enabling the first button (110; 210) to be pressed down, when it is in a numeral or sign position (125, 126; 225, 226), which pressing down activates entering of the information related to the position of the first button (110; 210) into the mobile station (10; 20).

7. A user interface (100; 200) according to any of the claims 1 to 6, **characterized in that** the mobile station (10; 20) is a mobile telephone or a Personal Digital Assistant.

8. A user interface (100; 200) according to any of the claims 1 to 7, **characterized in that** the user interface (100; 200) is a keypad or a keyboard.

9. A mobile station comprising a user interface (100; 200) according to any one of claims 1-6.

10. A mobile station according to claim 9, **characterized in that** the mobile station (10; 20) is a mobile telephone or a Personal Digital Assistant.

## Patentansprüche

1. Benutzerschnittstelle (100; 200) für eine Mobilstation (10; 20), wobei die Benutzerschnittstelle (100; 200) zumindest eine Taste (110, 130; 210, 230) zur Eingabe von Daten in die Mobilstation und einen Schlitz (120; 220) umfasst, innerhalb dessen eine erste Taste (110; 210) zwischen unterschiedlichen Positionen gleitbar ist, **dadurch gekennzeichnet, dass** der Schlitz (120; 220) mit Stoppvorrichtungen (222) in der Form von Bereichen mit erhöhter Reibung zwischen der ersten Taste (110; 210) und dem Schlitz (220) ausgebildet ist.

2. Benutzerschnittstelle (100; 200) nach Anspruch 1, bei der die Positionen, zwischen denen die erste Taste (110; 210) gleitbar ist, Zahlzeichenpositionen (125; 225) umfassen, die sich auf zumindest eines der Zahlzeichen 0 bis 9 beziehen.

3. Benutzerschnittstelle (100; 200) nach Anspruch 1 oder 2, bei der die Positionen, zwischen denen die Taste gleitbar ist, Zeichenpositionen (126; 226) umfassen, die sich auf Zeichen beziehen.

4. Benutzerschnittstelle (100; 200) nach Anspruch 1, 2 oder 3, **dadurch gekennzeichnet, dass** die Benutzerschnittstelle (100; 200) eine Einrichtung zur Eingabe von Informationen, die sich auf die Position der ersten Taste (110; 210) beziehen, in die Mobilstation (10; 20) umfasst.

5. Benutzerschnittstelle (100; 200) nach Anspruch 4, **dadurch gekennzeichnet, dass** die Eingabeeinrichtung eine zweite Taste (130; 230) ist, die in der Lage ist niedergedrückt zu werden, wobei das Niederdrücken das Eingeben von Informationen, die sich auf die Position der ersten Taste (110; 210) beziehen, in die Mobilstation aktiviert.

6. Benutzerschnittstelle (100; 200) nach Anspruch 4, **dadurch gekennzeichnet, dass** die Eingabeeinrichtung eine Einrichtung ist, um zu ermöglichen, dass die erste Taste (110; 210) niedergedrückt wird, wenn sie in einer Zahlzeichen- oder Zeichenposition (125, 126; 225, 226) ist, wobei das Niederdrücken ein Eingeben der Informationen, die sich auf die Position der ersten Taste (110; 210) beziehen, in die Mobilstation (10; 20) aktiviert.

7. Benutzerschnittstelle (100; 200) nach einem der Ansprüche 1 bis 6, **dadurch gekennzeichnet, dass** die Mobilstation (10; 20) ein Mobiltelefon oder ein PDA ist.

8. Benutzerschnittstelle (100; 200) nach einem der Ansprüche 1 bis 7, **dadurch gekennzeichnet, dass** die Benutzerschnittstelle (100; 200) ein Tastaturfeld oder eine Tastatur ist.

9. Mobilstation mit einer Benutzerschnittstelle (100; 200) nach einem der Ansprüche 1 bis 6.

10. Mobilstation nach Anspruch 9, **dadurch gekennzeichnet, dass** die Mobilstation (10; 20) ein Mobiltelefon oder ein PDA ist.

## Revendications

1. Interface utilisateur (100 ; 200) pour une station mobile (10 ; 20), laquelle interface utilisateur (100 ; 200) comprend au moins un bouton (110, 130 ; 210, 230) destiné à entrer des données dans la station mobile et une fente (120 ; 220) dans laquelle un premier bouton (110 ; 210) peut coulisser entre différentes positions, **caractérisée en ce que** la fente (120 ; 220) est dotée de points d'arrêts (222) sous la forme de zones à frottement accru entre le premier bouton (110 ; 210) et la fente (220).

2. Interface utilisateur (100 ; 200) selon la revendication 1, dans laquelle les positions entre lesquelles peut coulisser le premier bouton (110 ; 210) comprennent des positions numériques (125 ; 225) liées à au moins l'un des chiffres 0 à 9.

3. Interface utilisateur (100 ; 200) selon la revendication 1 ou 2, dans laquelle les positions entre lesquelles peut coulisser le bouton comprennent des positions de signes (126 ; 226) liées à des signes.

4. Interface utilisateur (100 ; 200) selon la revendication 1, 2 ou 3, **caractérisée en ce que** l'interface utilisateur (100 ; 200) comprend un moyen destiné à entrer des informations liées à la position du premier bouton (110 ; 210) dans la station mobile (10 ; 20).

5. Interface utilisateur (100; 200) selon la revendication 4, **caractérisée en ce que** le moyen d'entrée est un second bouton (130 ; 230) conçu pour être enfoncé, cet enfoncement activant l'entrée d'informations liées à la position du premier bouton (110 ; 210) dans la station mobile.

6. Interface utilisateur (100 ; 200) selon la revendication 4, **caractérisée en ce que** le moyen d'entrée est un moyen destiné à permettre d'enfoncer le premier bouton (110 ; 210) lorsqu'il se trouve dans une position de chiffre ou de signe (125, 126 ; 225, 226), cet enfoncement activant l'entrée des informations liées à la position du premier bouton (110 ; 210) dans la station mobile (10 ; 20).

7. Interface utilisateur (100 ; 200) selon l'une quelconque des revendications 1 à 6, **caractérisée en ce que** la station mobile (10 ; 20) est un téléphone mobile ou un assistant numérique personnel.

8. Interface utilisateur (100 ; 200) selon l'une quelconque des revendications 1 à 7, **caractérisée en ce que** l'interface utilisateur (100 ; 200) est un pavé ou un clavier.

9. Station mobile comprenant une interface utilisateur (100 ; 200) selon l'une quelconque des revendications 1 à 6.

10. Station mobile selon la revendication 9, **caractérisée en ce que** la station mobile (10 ; 20) est un téléphone mobile ou un assistant numérique personnel.
